# FASCICULE DE BREVET EUROPEEN

(11) **EP 1 215 985 B1**
(45) Date de publication et mention de la délivrance du brevet: **19.11.2003**
(21) Numéro de dépôt: 00964302.4
(22) Date de dépôt: 15.09.2000
(51) Int. Cl.: A47J 43/08

(54) **BATTEUR-MIXEUR ELECTRIQUE A MAIN**
ELEKTRISCH BETRIEBENES HANDRÜHR- UND MIXGERÄT
HAND HELD ELECTRICAL MIXING BEATER

(30) Priorité: 16.09.1999 FR 9911623
(43) Date de publication de la demande: 26.06.2002
(73) Titulaire: SEB S.A., 69130 Ecully (FR)
(72) Inventeur: BEAUDET, Jean-Yves, F-61400 Haleine (FR); MARRIERE, Marc, F-53300 Ambrières les Vallées (FR)
(74) Mandataire: Kiehl, Hubert
(86) Numéro de dépôt international: FR0002571
(87) Numéro de publication internationale: WO01019225

(56) Documents cités:
- DE-A- 4 142 074
- US-A- 5 316 382
- US-A- 5 803 598

## Description

La présente invention concerne un batteur-mixeur électrique à main, notamment un batteur-mixeur ménager, destiné à entraîner de manière sélective au moins un accessoire dit de battage tel que, par exemple, un fouet, ou un accessoire dit de mixage tournant à vitesse élevée tel que, par exemple, un pied mixeur, et comportant un corps contenant un moteur d'entraînement électrique, deux dispositifs rotatifs d'accouplement reliés à l'arbre du moteur et destinés à recevoir, via respectivement deux passages d'engagement débouchant du corps, l'accessoire de battage et, respectivement, l'accessoire de mixage, et un commutateur de commande du moteur électrique qui est actionné par une manette d'actionnement montée rotative sur un axe de rotation de manière à venir occuper une position arrêt et plusieurs positions de commutation pour la marche continue du moteur.

On entend par accessoire de battage un outil de travail du type fouet ou malaxeur, et par accessoire de mixage un accessoire à outil de travail tournant à vitesse élevée du type pied mixeur à couteau rotatif.

Dans un appareil connu de ce genre, la manette d'actionnement est adaptée à commander le même commutateur de commande de la marche continue du moteur, aussi bien en cas d'utilisation de l'accessoire de battage qu'en cas d'utilisation de l'accessoire de mixage ; dans ces deux cas d'utilisation, la manette d'actionnement est verrouillée dans chacune de ses positions de commutation permettant la marche continue du moteur. Toutefois, en présence de l'accessoire de mixage dont l'outil de travail du type couteau est destiné à tourner à vitesse élevée, il peut arriver que par mégarde l'appareil en service glisse de la main de l'utilisateur ; dans ce cas, du fait que la manette d'actionnement reste verrouillée en position de commutation, l'appareil est toujours en marche et, de fait, l'outil de travail en mouvement risque d'exposer l'utilisateur à de graves blessures.

Un tel appareil est connu de US-A-5 803 598.

L'invention a notamment pour but de supprimer ce risque et de réaliser un batteur-mixeur électrique à main, du type exposé ci-dessus, qui présente une sécurité de fonctionnement accrue en marche continue du moteur lorsqu'il est plus particulièrement équipé de l'accessoire de mixage.

Selon l'invention, un ressort spiralé est monté concentriquement à l'axe de rotation de la manette d'actionnement et présente une extrémité dite fixe qui est liée à ladite manette d'actionnement et une extrémité dite libre, et l'appareil comporte de plus une pièce de sécurité présentant une partie formant appui et montée mobile dans le corps entre une position de repos pour laquelle l'accessoire de mixage est inséré dans son dispositif d'accouplement et dans laquelle l'extrémité libre du ressort repose sur la partie formant appui de ladite pièce de sécurité de manière à ce que le ressort soit en permanence en tension lorsque la manette d'actionnement vient occuper chacune de ses positions de commutation, de sorte que la manette d'actionnement est maintenue dans sa position de commutation par la main d'un opérateur à l'encontre de la force du ressort, et une position escamotée en laquelle elle est amenée par suite de l'insertion de l'accessoire de battage dans son dispositif d'accouplement et dans laquelle sa partie formant appui est effacée par rapport à l'extrémité libre du ressort de manière à ce que le ressort soit en permanence hors tension lorsque la manette d'actionnement vient occuper chacune de ses positions de commutation dans laquelle ladite manette est maintenue en place à l'aide de moyens mécaniques de retenue disposés dans le corps, ladite pièce de sécurité revenant automatiquement en position de repos après retrait de l'accessoire de battage.

Grâce à cette pièce escamotable de sécurité permettant de mettre en permanence en tension le ressort spiralé lié à la manette d'actionnement lors de la marche continue du moteur en présence de l'accessoire de mixage, on comprend que la manette reviendra automatiquement en position arrêt sous l'action du ressort si l'appareil glisse de la main de l'utilisateur. En outre, cette pièce de sécurité constitue en soi une pièce propre à détecter soit la présence de l'accessoire de mixage, la manette d'actionnement du commutateur en position de marche continue étant maintenue à la main, soit la présence de l'accessoire de battage, la manette d'actionnement du commutateur en position de marche continue étant verrouillée.

Les caractéristiques et avantages de l'invention ressortiront de la description qui va suivre, prise à titre d'exemple non limitatif, en référence aux dessins annexés dans lesquels :
- la figure 1 est une vue partielle en coupe verticale d'un batteur-mixeur selon l'invention, en position arrêt et en l'absence d'accessoire ;
- la figure 2 est une vue de dessus, à échelle réduite, du batteur-mixeur de la figure 1 ;
- la figure 3 est une vue identique à la figure 1, avec montage d'un accessoire de mixage ;
- les figures 4, 5 et 6 sont des vues en perspective, à échelle agrandie, d'une partie du batteur-mixeur de la figure 3, montrant une manette associée à un dispositif de sécurité et occupant une position arrêt (figure 4) et deux positions successives de commutation (figures 5 et 6) ;
- la figure 7 est une vue identique à la figure 1, avec montage d'un accessoire de battage ; et
- les figures 8, 9 et 10 sont des vues en perspective, à échelle agrandie, d'une partie du batteur-mixeur de la figure 7, montrant la manette associée au dispositif de sécurité et occupant sa position arrêt (figure 8) et deux positions successives de commutation (figures 9 et 10).

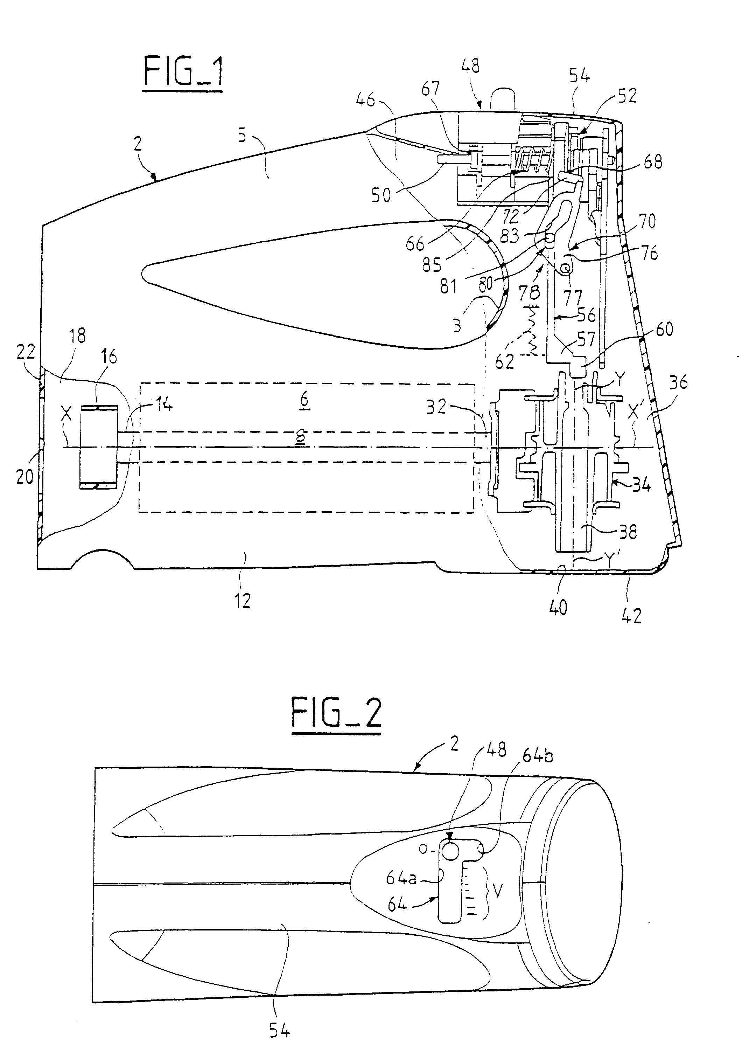

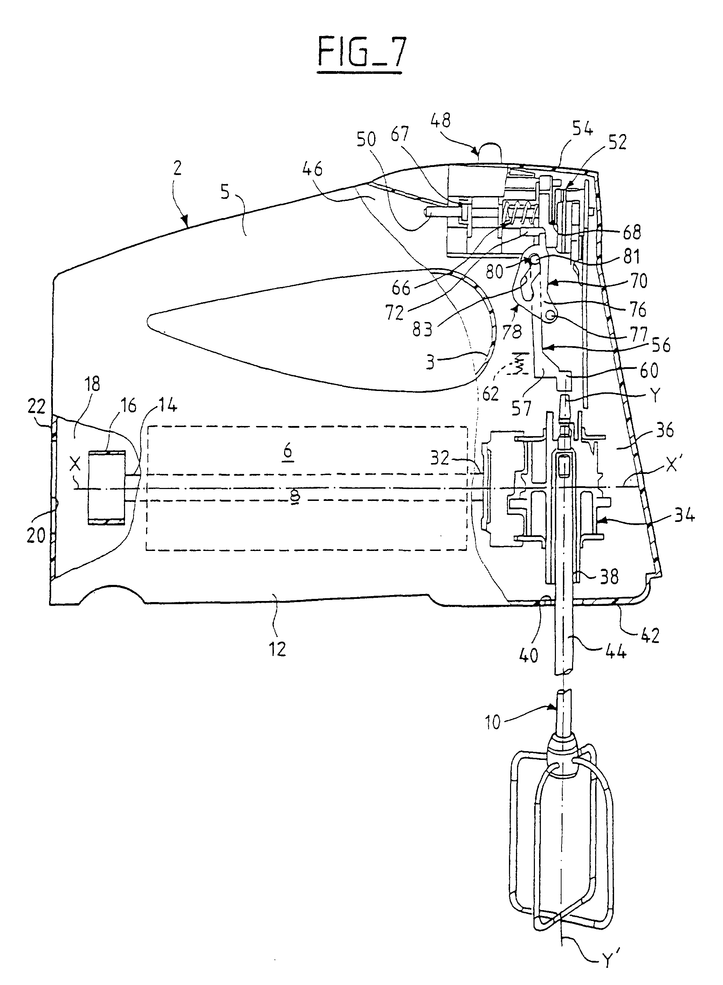

Le batteur-mixeur à main illustré à la figure 1 comprend un corps 2 de forme générale sensiblement prismatique présentant une partie évidée 3 qui délimite une poignée 5, et contenant un moteur d'entraînement électrique 6 muni d'un arbre 8 d'axe longitudinal XX' et logé, en utilisation normale avec au moins un accessoire dit de battage tel que, par exemple, un fouet 10 comme montré à la figure 7, dans la partie inférieure 12 du corps 2 en s'étendant horizontalement.

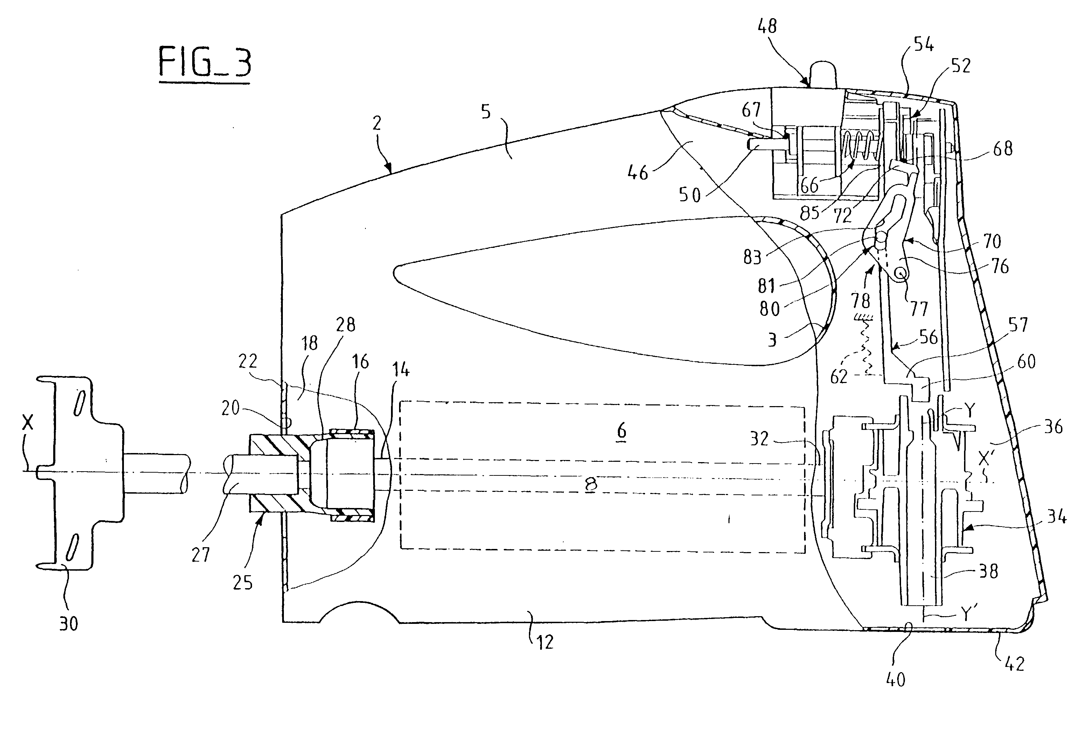

Dans l'exemple de réalisation illustré à la figure 1, l'arbre 8 du moteur d'entraînement 6 porte à son extrémité postérieure 14 un dispositif rotatif d'accouplement 16 formant un entraîneur qui est agencé dans la partie arrière 18 du corps 2. Dans cet exemple, l'entraîneur 16 est situé en regard d'une ouverture 20 pratiquée dans la paroi postérieure 22 du corps 2 de manière à définir un passage débouchant du corps et destiné à l'engagement d'un accessoire de mixage tournant à vitesse élevée tel que, par exemple, un pied mixeur 25 comme montré à la figure 3. Ce pied mixeur 25, figure 3, comprend un arbre 27 dont l'extrémité dite antérieure 28, opposée à la cloche 30 logeant un couteau non représenté, est adaptée à venir s'accoupler, par exemple par vissage, avec l'entraîneur 16.

Dans cet exemple, figure 1, l'arbre 8 du moteur d'entraînement 6 porte à son extrémité antérieure 32 une vis sans fin (non représentée) qui coopère avec deux pignons hélicoïdaux tournant chacun autour d'un axe YY' perpendiculaire à l'axe XX', et qui forme avec ceux-ci un réducteur 34. Ces deux pignons hélicoïdaux sont situés dans la partie avant 36 du corps 2 et sont liés respectivement à deux autres dispositifs rotatifs d'accouplement 38 d'axe YY', dont un seul est visible à la figure 1, qui sont respectivement ouverts en regard de deux ouvertures 40 pratiquées dans la paroi inférieure 42 du corps 2 de manière à définir deux passages débouchant du corps et destinés à l'engagement de deux fouets 10 dont un seul est montré à la figure 7. Chaque fouet 10 comprend une tige cylindrique 44 (figure 7), d'axe YY', dont l'extrémité supérieure est destinée à venir se fixer dans le dispositif d'accouplement correspondant 38. Les deux fouets 10 peuvent être fixés dans les dispositifs d'accouplement soit l'un derrière l'autre, soit sur la figure 7 côte à côte.

Comme le montre la figure 1, dans la partie supérieure 46 du corps 2, à l'avant de celle-ci, est agencée en saillie une manette d'actionnement 48 qui est montée rotative sur un axe de rotation 50 s'étendant parallèlement à l'axe XX' de l'arbre 8 du moteur d'entraînement 6. Cette manette 48 est destinée à actionner un commutateur électrique 52, ici du type rotatif, qui met le moteur 6 en et hors service et règle sa vitesse de rotation. A cet effet, la manette 48 d'actionnement du commutateur 52 est susceptible d'occuper une position arrêt (notée "0" sur la figure 2) et plusieurs positions successives de commutation pour lesquelles le commutateur 52 sélectionne différents paliers de vitesse du moteur 6 correspondant à une marche continue du moteur. Ces différentes positions de commutation de la manette d'actionnement 48 sont indiquées sous la forme de repères appropriés, notés globalement en V sur la figure 2, qui sont marqués sur la paroi supérieure 54 du corps 2, d'un même côté de la position arrêt "0" de la manette d'actionnement 48, figure 2.

En regard de la figure 1, le batteur-mixeur comporte en outre un organe dit d'éjection 56 agencé verticalement dans la partie avant 36 du corps 2 et comprenant à sa partie inférieure 57 deux pions verticaux cylindriques 60, dont un seul est visible à la figure 1, associés chacun au dispositif d'accouplement correspondant 38. Cet organe d'éjection 56 est monté mobile en translation verticale, suivant une direction parallèle à l'axe YY', en étant sollicité élastiquement par des moyens de rappel élastique, en l'occurrence un ressort de compression 62, pour passer d'une position basse en l'absence des fouets (figure 1) à une position haute dans laquelle les pions 60 sont actionnés par les fouets 10 lors de leur fixation dans le dispositif d'accouplement associé 38(figure 7), et inversement de cette position haute à la position basse dans laquelle l'organe d'éjection 56 libère les fouets sous l'action, dans ce mode d'exécution, de la même manette d'actionnement 48 depuis sa position arrêt.

Comme le montre la figure 2, la manette d'actionnement 48 fait saillie hors d'une lumière de débattement 64 ménagée dans la paroi supérieure 54 du corps 2. Cette lumière 64 comprend une partie rectiligne allongée 64a dans laquelle est susceptible de se déplacer par rotation la manette d'actionnement 48 pour venir occuper sa position arrêt "0" ainsi que ses différentes positions successives de commutation V permettant la marche continue du moteur, et une courte partie rectiligne 64b communiquant avec la partie 64a et s'étendant au-delà de celle-ci en étant située au niveau de la position arrêt de la manette 48 ; la manette en position arrêt est adaptée à se déplacer dans cette partie 64b de la lumière 64 de manière à commander l'actionnement de l'organe d'éjection 56 des fouets.

Sur la figure 1, on a désigné en 66 un ressort spiralé du type à boudin qui est monté concentriquement à l'axe de rotation 50 de la manette d'actionnement 48 et qui présente une extrémité dite fixe 67 liée à la manette par tout moyen de fixation approprié, et une extrémité dite libre 68. Bien entendu, le ressort spiralé 66 pourrait également être un organe élastique de tout autre type dont une extrémité est fixée à la manette 48 et dont l'autre extrémité est libre.

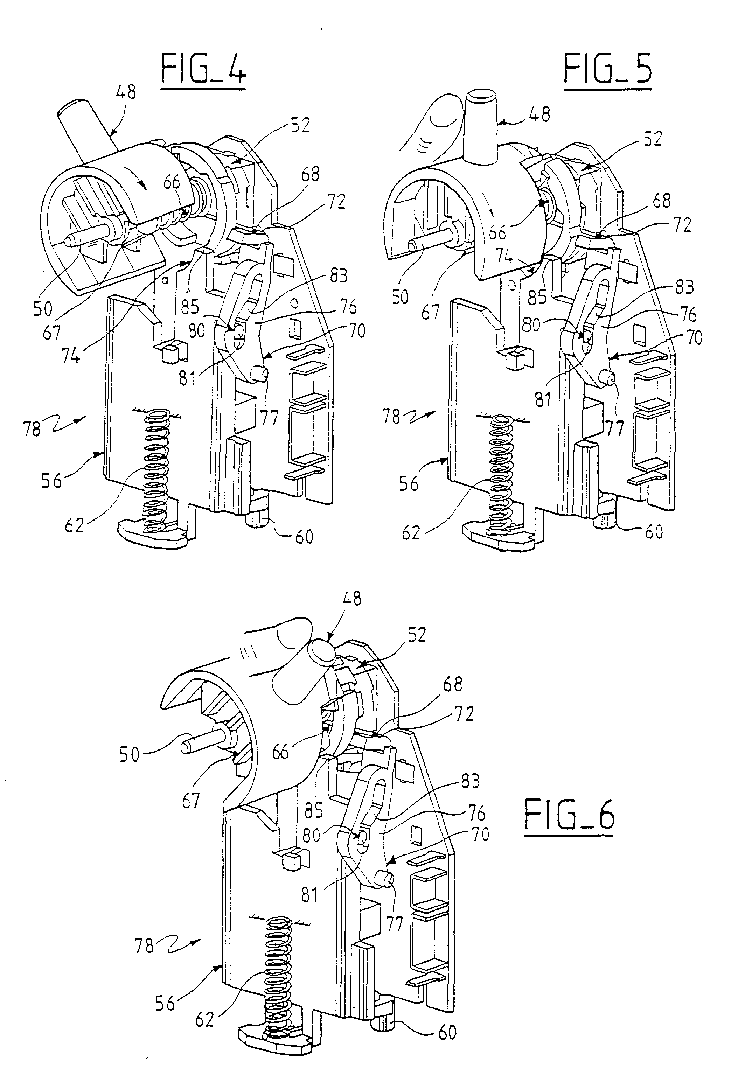

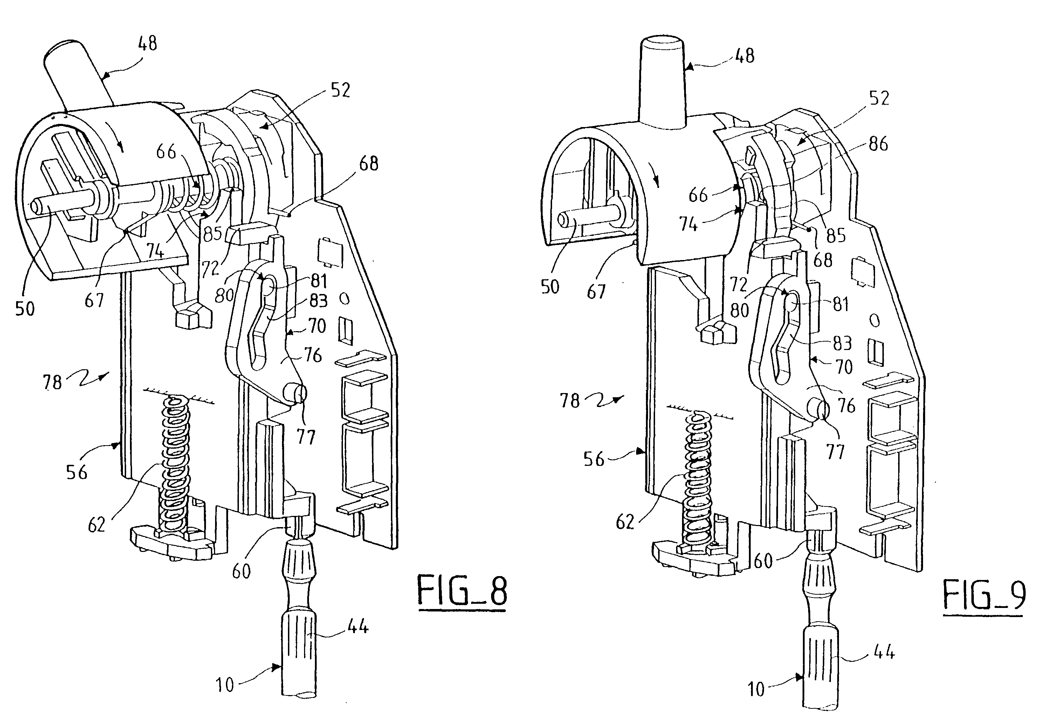

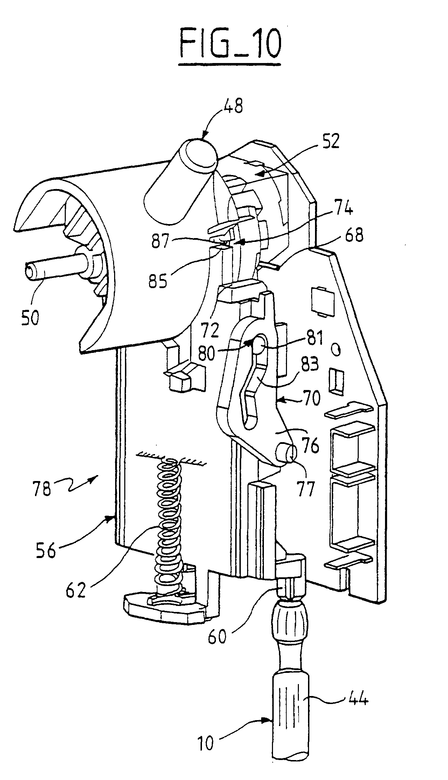

Conformément à l'invention, le batteur-mixeur de la figure 1 comporte de plus une pièce de sécurité 70 présentant une partie formant appui 72 et montée mobile dans le corps 2 entre :
- une position de repos (figure 3) pour laquelle le pied mixeur 25 est accouplé à l'entraîneur 16 et dans laquelle l'extrémité libre 68 du ressort 66 repose sur la partie formant appui 72 de la pièce de sécurité 70 de manière à ce que le ressort 66 soit en permanence en tension lorsque la manette d'actionnement 48 vient occuper chacune de ses positions de commutation (voir figures 5 et 6) , de sorte que ladite manette 48 est maintenue dans sa position de commutation par la main d'un opérateur à l'encontre de la force du ressort 66, voir figures 5 et 6;
- et une position escamotée (figure 7) en laquelle elle est amenée par suite du montage des fouets 10 et dans laquelle sa partie formant appui 72 est effacée par rapport à l'extrémité libre 68 du ressort 66 de manière à ce que le ressort 66 soit en permanence hors tension lorsque la manette 48 vient occuper chacune de ses positions de commutation (voir figures 9 et 10) dans laquelle la manette 48 est maintenue en place à l'aide de moyens de retenue repérés en 74 sur les figures 9 et 10.
   Ainsi, lors du fonctionnement en marche continue de l'appareil, la pièce de sécurité 70 en position escamotée
- montage des fouets - provoque la détente du ressort 66 de manière que la manette d'actionnement 48 soit verrouillée en position de commutation, tandis qu'en position de repos - montage du pied mixeur - la pièce de sécurité 70 provoque la mise en tension du ressort 66 et oblige donc l'utilisateur à exercer en permanence une pression sur la manette 48 pour maintenir celle-ci dans sa position de commutation ; dès lors, si l'appareil en service, équipé du pied mixeur 25, glisse de la main de l'utilisateur, la manette 48 revient automatiquement en position arrêt sous l'action du ressort 66, coupant ainsi rapidement la marche continue de l'appareil.

Dans un mode d'exécution préféré, bien visible aux figures 4 à 6 et 8 à 10, la pièce de sécurité 70 est constituée par un levier 76 monté basculant, par l'une de ses extrémités, autour d'un axe 77 transversal à l'axe de rotation 50 de la manette d'actionnement 48, et comportant à son autre extrémité la partie formant appui 72 conformée en crochet. Le levier 76 est actionné par des moyens de commande 78 qui sont montés mobiles dans le corps 2 et dont le déplacement permettant le basculement du levier 76 depuis sa position de repos (figure 3) jusqu'à sa position escamotée (figure 7) est subordonné à la mise en place des fouets dans leur dispositif d'accouplement correspondant 38.

Dans cet exemple, les moyens de commande 78 du levier 76 comportent l'organe d'éjection 56 qui coopère avec le levier 76 par un mécanisme à excentrique 80, lequel comprend présentement un tenon 81 porté par l'organe d'éjection 56 et apte à se déplacer dans une rampe formant came 83 pratiquée dans le levier 76, comme on le voit bien sur les figures 4 à 6 et 8 à 10. Ainsi, les moyens de commande 78 du levier sont avantageusement d'une structure simple et peu coûteuse dans la mesure où ils font judicieusement intervenir l'organe d'éjection qui est habituellement utilisé dans ce type d'appareil.

En outre, les moyens de retenue 74 (figures 9 et 10) de la manette d'actionnement 48 dans chacune de ses positions de commutation lorsque le levier 76 est dans sa position escamotée - montage des fouets -, comportent un ergot 85 porté par l'organe d'éjection 56 et venant coopérer, uniquement lorsque l'organe d'éjection 56 occupe sa position haute, avec un cran 86 (figure 9) ou 87 (figure 10) pratiqué dans la manette d'actionnement 48 et associé à la position de commutation de cette dernière, comme montré aux figures 9 et 10.

Dans la position d'arrêt du batteur-mixeur, en l'absence de tout accessoire, comme illustré aux figures 1 et 2, la manette d'actionnement 48 est en position arrêt "0" et l'organe d'éjection 56 occupe sa position basse pour laquelle, d'une part, son tenon 81 est sensiblement en bas de la rampe 83 du levier 76 et, d'autre part, son ergot 85 (figure 4) est dégagé de la manette d'actionnement 48. L'organe d'éjection 56 étant en position basse, le levier 76 occupe sa position de repos dans laquelle l'extrémité libre 68 du ressort 66 repose sur la partie formant appui 72 du levier, comme on le voit bien sur la figure 4.

Lorsque l'utilisateur souhaite se servir du pied mixeur 25, il accouple celui-ci avec l'entraîneur 16 (figure 3), la manette 48 étant en position arrêt telle qu'illustrée à la figure 4 et correspondant à la position de repos du levier 76 de la figure 1. A partir de cette position arrêt de la manette 48, l'utilisateur peut alors tourner celle-ci en sens horaire pour amener le commutateur 52 à sélectionner différentes vitesses de rotation du moteur en marche continue. A titre d'exemple, les figure 5 et 6 représentent la manette d'actionnement 48 dans deux positions successives de commutation dans chacune desquelles le levier 76 reste en position de repos de manière à mettre en tension le ressort 66, obligeant l'utilisateur à maintenir à la main la manette d'actionnement 48, comme illustré sur les figures 5 et 6. Lorsque l'utilisateur relâche la manette 48, celle-ci revient alors automatiquement, sous l'action du ressort 66 par son extrémité fixe 67, dans sa position arrêt telle qu'illustrée aux figures 3 et 4.

A partir de la position d'arrêt de la figure 3, le pied mixeur 25 peut être simplement retiré par dévissage.

Lorsque l'utilisateur souhaite maintenant se servir des fouets 10, le batteur-mixeur étant dans sa position d'arrêt telle que montrée à la figure 1, il engage chacun des fouets 10 dans le dispositif d'accouplement correspondant 38, figure 7. Lors de leur engagement, l'extrémité libre de la tige 44 de chaque fouet 10 sollicite le pion correspondant 60 de l'organe d'éjection 56 qui passe en sa position haute, à l'encontre du ressort 62, dans laquelle son ergot 85 (figure 8) est engagé à l'intérieur de la manette 48 en position arrêt. Lors de ce passage en position haute de l'organe d'éjection 56, le tenon 81 de celui-ci monte dans la rampe 83 du levier 76 et provoque ainsi le basculement du levier 76 qui vient alors occuper sa position escamotée dans laquelle sa partie formant appui 72 est effacée par rapport à l'extrémité libre 68 du ressort 66, lequel est désormais hors tension, comme montré à la figure 7. A partir de la position arrêt de la manette d'actionnement 48, mieux visible à la figure 8, l'utilisateur peut alors, comme précédemment, tourner la manette 48 en sens horaire pour amener le commutateur 52 dans différentes positions de marche continue. A titre d'exemple, les figures 9 et 10 représentent la manette d'actionnement 48 dans deux positions successives de commutation dans chacune desquelles l'ergot 85 est en prise avec le cran correspondant 86 (figure 9) ou 87 (figure 10) de la manette 48, verrouillant ainsi en position la manette.

A partir de la position de commutation de la manette 48 (figure 9 ou 10), l'utilisateur peut alors arrêter l'appareil en tournant en sens inverse la manette 48 jusqu'à sa position arrêt telle qu'illustrée aux figures 7 et 8. Les fouets 10 peuvent être ensuite libérés par l'organe d'éjection 56 sous l'action de la manette d'actionnement 48, ledit organe d'éjection 56 revenant à sa position basse en provoquant, par suite d'une descente du tenon 81 dans la rampe 83 du levier 76, le basculement en sens inverse du levier 76 qui revient à sa position de repos telle que montrée à la figure 1.

## Revendications

1. Batteur-mixeur électrique à main destiné à entraîner de manière sélective au moins un accessoire dit de battage (10) tel que, par exemple, un fouet, ou un accessoire dit de mixage (25) tournant à vitesse élevée tel que, par exemple, un pied mixeur, comportant un corps (2) contenant un moteur d'entraînement électrique (6), deux dispositifs rotatifs d'accouplement (38, 16) reliés à l'arbre du moteur et destinés à recevoir, via respectivement deux passages d'engagement débouchant du corps, l'accessoire de battage (10) et, respectivement, l'accessoire de mixage (25), et un commutateur (52) de commande du moteur électrique qui est actionné par une manette d'actionnement (48) montée rotative sur un axe de rotation (50) de manière à venir occuper une position arrêt et plusieurs positions de commutation pour la marche continue du moteur,
**caractérisé en ce qu'**un ressort spiralé (66) est monté concentriquement à l'axe de rotation (50) de la manette d'actionnement (48) et présente une extrémité dite fixe (67) qui est liée à ladite manette d'actionnement (48) et une extrémité dite libre (68), et **en ce qu'**il comporte de plus une pièce de sécurité (70) présentant une partie formant appui (72) et montée mobile dans le corps (2) entre une position de repos pour laquelle l'accessoire de mixage (25) est inséré dans son dispositif d'accouplement (16) et dans laquelle l'extrémité libre (68) du ressort (66) repose sur la partie formant appui (72) de ladite pièce de sécurité (70) de manière à ce que le ressort (66) soit en permanence en tension lorsque la manette d'actionnement (48) vient occuper chacune de ses positions de commutation, de sorte que la manette d'actionnement (48) est maintenue dans sa position de commutation par la main d'un opérateur à l'encontre de la force du ressort (66), et une position escamotée en laquelle elle est amenée par suite de l'insertion de l'accessoire de battage (10) dans son dispositif d'accouplement (38) et dans laquelle sa partie formant appui (72) est effacée par rapport à l'extrémité libre (68) du ressort (66) de manière à ce que le ressort (66) soit en permanence hors tension lorsque la manette d'actionnement (48) vient occuper chacune de ses positions de commutation dans laquelle ladite manette (48) est maintenue en place à l'aide de moyens mécaniques de retenue (74) disposés dans le corps, ladite pièce de sécurité (70) revenant automatiquement en position de repos après retrait de l'accessoire de battage (10).

2. Batteur-mixeur selon la revendication 1,
**caractérisé en ce que** la pièce de sécurité (70) est constituée par un levier basculant (76) comportant, à l'une de ses extrémités, la partie formant appui (72), et actionné par des moyens de commande (78) qui sont montés mobiles dans le corps et dont le déplacement permettant le basculement du levier (76) depuis sa position de repos jusqu'à sa position escamotée est subordonné à la mise en place de l'accessoire de battage (10) dans son dispositif d'accouplement (38), à l'encontre de moyens de rappel élastique (62).

3. Batteur-mixeur selon la revendication 2, dans lequel l'axe de rotation (50) de la manette d'actionnement (48) s'étend sensiblement parallèlement à l'axe longitudinal (XX') de l'arbre (8) du moteur (6),
**caractérisé en ce que** le levier (76) est monté basculant, par son autre extrémité, autour d'un axe (77) transversal à l'axe de rotation (50) de la manette d'actionnement (48), et **en ce que** les moyens de commande (78) comportent un organe dit d'éjection (56) associé au dispositif d'accouplement (38) de l'accessoire de battage, coopérant avec le levier (76) par un mécanisme à excentrique (80), et déplaçable en translation verticale, à l'encontre des moyens de rappel élastique (62), d'une position basse en l'absence de l'accessoire de battage et correspondant à la position de repos du levier (76), à une position haute sous l'action de l'accessoire de battage (10) lors de sa mise en place dans son dispositif d'accouplement (38) et correspondant à la position escamotée du levier (76), et inversement de cette position haute à la position basse dans laquelle il libère l'accessoire de battage (10), tandis que les moyens de rappel élastique (62) tendent à rappeler le levier (76) en position de repos.

4. Batteur-mixeur selon la revendication 3,
**caractérisé en ce que** le mécanisme à excentrique (80) comprend un tenon (81) porté par l'organe d'éjection (56) et apte à se déplacer dans une rampe formant came (83) pratiquée dans le levier (76) de manière à assurer le basculement du levier (76) vers sa position escamotée lors du déplacement vertical de l'organe d'éjection (56) depuis sa position basse jusqu'à sa position haute.

5. Batteur-mixeur selon la revendication 3 ou 4,
**caractérisé en ce que** les moyens mécaniques (74) de retenue de la manette d'actionnement (48) dans chacune de ses positions de commutation lorsque le levier (76) est dans sa position escamotée, comportent un ergot (85) porté par l'organe d'éjection (56) et venant coopérer, uniquement lorsque ledit organe d'éjection (56) occupe sa position haute, avec un cran (86 ; 87) pratiqué dans la manette d'actionnement (48) et associé à ladite position de commutation de la manette (48).

## Claims

1. Hand-held electrical beater/mixer intended to selectively drive at least one so-called beating accessory (10) such as, for example, a whisk, or a so-called mixing accessory (25) rotating at high speed such as, for example, a mixing head, comprising a body (2) containing an electrical drive motor (6), two rotary coupling devices (38, 16) connected to the motor shaft and intended to receive, via respectively two engagement passages opening out from the body, the beating accessory (10) and, respectively, the mixing accessory (25), and a switch (52) controlling the electric motor which is actuated by an actuating handle (48) mounted so as to rotate on a rotation shaft (50) so as to come to occupy a stop position and several switching positions for the continuous running of the motor, **characterised in that** a spiral spring (66) is mounted concentrically with the rotation shaft (50) of the actuating handle (48) and has a so-called fixed end (67) which is connected to the said actuating handle (48) and a so-called free end (68), and **in that** it also comprises a safety piece (70) having a part forming a support (72) and mounted so as to be able to move in the body (2) between an idle position in which the mixing accessory (25) is inserted in its coupling device (16) and in which the free end (68) of the spring (66) rests on the part forming a support (72) of the said safety piece (70) so that the spring (66) is permanently under tension when the actuating handle (48) comes to occupy each of its switching positions, so that the actuating handle (48) is maintained in its switching position by the hand of an operator counter to the force of the spring (66), and a retracted position into which it is brought following the insertion of the beating accessory (10) in its coupling device (38) and in which its part forming a support (72) is retracted with respect to the free end (68) of the spring (66) so that the spring (66) is permanently untensioned when the actuating handle (48) comes to occupy each of its switching positions in which the said handle (48) is maintained in place by means of mechanical retaining means (74) disposed in the body, the said safety piece (70) returning automatically to the idle position after removal of the beating accessory (10) .

2. Beater/mixer according to claim 1, **characterised in that** the safety piece (70) consists of a tilting lever (76) comprising, at one of its ends, the part forming a support (72), and actuated by control means (78) which are mounted so as to be able to move in the body and whose movement allowing the tilting of the lever (76) from its idle position to its retracted position is subject to the fitting of the beating accessory (10) in its coupling device (38), counter to elastic return means (62).

3. Beater/mixer according to claim 2, in which the rotation shaft (50) of the actuating handle (48) extends substantially parallel to the longitudinal axis (XX') of the shaft (8) of the motor (6), **characterised in that** the lever (76) is mounted so as to tilt, by means of its other end, about a shaft (77) transverse to the rotation shaft (50) of the actuating handle (48), and **in that** the control means (78) comprise a so-called ejection member (56) associated with the coupling device (38) of the beating accessory, cooperating with the lever (76)through a mechanism with eccentric (80), and able to move in vertical translation, counter to elastic return means (62), from a low position in the absence of the beating accessory and corresponding to the idle position of the lever (76), to a high position under the action of the beating accessory (10) when it is fitted in its coupling device (38) and corresponding to the retracted position of the lever (76), and conversely from this high position to the low position in which it releases the beating accessory (10), whilst the elastic return means (62) tend to return the lever (76) to the idle position.

4. Beater/mixer according to claim 3, **characterised in that** the mechanism with eccentric (80) comprises a tenon (81) carried by the ejection member (56) and able to move in a ramp forming a cam (83) formed in the lever (76) so as to provide the tilting of the lever (76) to its retracted position when the ejection member (56) moves vertically from its low position to its high position.

5. Beater/mixer according to claim 3 or 4, **characterised in that** the mechanical means (74) of retaining the actuating handle (48) in each of its switching positions when the lever (76) is in its retracted position comprise a lug (85) carried by the ejection member (56) and cooperating, only when the said ejection member (56) occupies its high position, with a notch (86 ; 87) formed in the actuating handle (48) and associated with the said switching position of the handle (48).

## Patentansprüche

1. In der Hand zu haltendes elektrisches Rühr- und Mixgerät, das zum selektiven Antrieb mindestens eines sogenannten Rühransatzes (10), wie beispielsweise eines Quirls, oder eines mit hoher Geschwindigkeit drehenden Mixansatzes (25), wie beispielsweise eines Mixstabs, dient, mit einem Körper (2), der einen elektrischen Antriebsmotor (6), zwei drehbare Kupplungsvorrichtungen (38, 16), die mit der Welle des Motors verbunden sind, und über jeweils zwei im Körper mündende Eingriffsdurchlässe zur Aufnahme des Rühransatzes (10) bzw. des Mixansatzes (25) dienen, und einen Schalter (25) zur Steuerung des Elektromotors enthält, der durch einen Bedienungshebel (48) betätigbar ist, der um eine Drehachse (50) drehbar montiert ist, so daß er eine Stoppstellung und mehrere Schaltstellungen für den kontinuierlichen Betrieb des Motors einnehmen kann, **dadurch gekennzeichnet, daß** eine Spiralfeder (66) konzentrisch zur Drehachse (50) des Bedienungshebels (48) montiert ist und ein sogenanntes festes Ende, das mit dem Bedienungshebel (48) verbunden ist, und ein sogenanntes freies Ende (68) aufweist und daß das Gerät außerdem ein Sicherheitselement (70) mit einem einen Anschlag (72) bildenden Teil aufweist, das im Körper (2) zwischen einer Ruhestellung, in der der Mixansatz (25) in seine Kupplungsvorrichtung (16) eingesetzt ist und in der das freie Ende (68) der Feder (66) auf dem einen Anschlag (72) bildenden Teil des Sicherheitselements (70) ruht, so daß die Feder (66) dauernd gespannt ist, wenn der Bedienungshebel (48) jede seiner Schaltstellungen einnimmt, so daß der Bedienungshebel (48) in seiner Schaltstellung durch die Hand einer Bedienungsperson gegen die Wirkung der Feder (66) gehalten ist, und einer weggeschobenen Stellung beweglich montiert ist, in die es durch das Einsetzen des Rühransatzes (10) in seine Kupplungsvorrichtung (38) gebracht wird und in der sein einen Anschlag (72) bildender Teil bezüglich des freien Endes (68) der Feder (66) beiseitegeschoben ist, so daß die Feder (66) dauernd außer Spannung ist, wenn der Bedienungshebel (48) jede seiner Schaltstellungen einnimmt, in welcher der Bedienungshebel (48) durch eine im Körper angeordnete mechanische Rückhaltevorrichtung (74) an seinem Platz gehalten ist, wobei das Sicherheitselement (70) automatisch in die Ruhestellung zurückkehrt, nachdem der Rühransatz (10) zurückgezogen wurde.

2. Rühr-Mixgerät nach Anspruch 1, **dadurch gekennzeichnet, daß** das Sicherheitselement (70) aus einem schwenkbaren Hebel (76) besteht, der an einem seiner Enden den einen Anschlag bildenden Teil aufweist und der durch eine Steuervorrichtung (78) betätigt ist, welche im Körper beweglich montiert ist und deren Verschiebung das Schwenken des Hebels (76) von seiner Ruhestellung bis in seine weggeschwenkte Stellung ermöglicht und dem Einsetzen des Rühransatzes (10) in seine Kupplungsvorrichtung (38) gegen die Wirkung der elastischen Rückstellvorrichtung (62) untergeordnet ist.

3. Rühr- und Mixgerät nach Anspruch 2, worin die Drehachse (50) des Bedienungshebels (48) sich im wesentlichen parallel zur Längsachse (XX') der Welle (8) des Motors (6) erstreckt, **dadurch gekennzeichnet, daß** der Hebel (76) mit seinem anderen Ende schwenkbar um eine quer zur Drehachse (50) des Bedienungshebels (48) verlaufende Achse montiert ist und daß die Steuervorrichtung (78) ein sogenanntes Auswurfelement (56) aufweist, das zu der Kupplungsvorrichtung (38) des Rühransatzes gehört und mit dem Hebel (76) durch einen exzentrischen Mechanismus (80) zusammenwirkt, der in vertikaler Richtung gegen eine elastische Rückstellvorrichtung (62) von einer unteren Stellung in Abwesenheit des Rühransatzes und entsprechend der Ruhestellung des Hebels (76) unter der Wirkung des Rühransatzes (10) bei seinem Einsetzen in seine Kupplungsvorrichtung (38) in eine obere Stellung verschiebbar ist, die der weggeschwenkten Stellung des Hebels (76) entspricht, und umgekehrt aus.dieser oberen Stellung in die untere Stellung, in der es den Rühransatz (10) freigibt, während die elastische Rückstellvorrichtung (62) bestrebt ist, den Hebel (76) in die Ruhestellung zurückzubringen.

4. Rühr- und Mixgerät nach Anspruch 3, **dadurch gekennzeichnet, daß** der exzentrische Mechanismus (80) einen Zapfen (81) aufweist, der vom Auswurfelement (56) getragen ist und sich in einer eine Nocke (83) bildenden Rampe verschieben kann, die im Hebel (76) ausgebildet ist, um das Schwenken des Hebels (76) in seine weggesehwenkte Stellung bei der vertikalen Verschiebung des Auswurfelements (56) von seiner unteren bis in seine obere Stellung zu besorgen.

5. Rühr- und Mixgerät nach Anspruch 3 oder 4, **dadurch gekennzeichnet, daß** die mechanische Vorrichtung (74) zum Zurückhalten des Bedienungshebels (48) in jeder seiner Schaltstellungen, wenn sich der Hebel (76) in seiner weggeschenkten Stellung befindet, einen vom Auswurfelement (56) getragenen Zapfen (85) aufweist, der nur, wenn das Auswurfelement (56) sich in seiner oberen Stellung befindet, mit einem Einschnitt (86; 87) zusammenwirkt, der im Bedienungshebel (48) ausgebildet ist und zur Schaltstellung des Bedienungshebels gehört.
